# EUROPÄISCHE PATENTSCHRIFT

(11) **EP 2 322 012 B1**
(45) Veröffentlichungstag und Bekanntmachung des Hinweises auf die Patenterteilung: **06.01.2016**
(21) Anmeldenummer: 09781000.6
(22) Anmeldetag: 23.07.2009
(51) Int. Cl.: H05B 3/14, B64D 47/06, C04B 35/00

(54) **HEIZUNGSVORRICHTUNG UND VERFAHREN ZUR HERSTELLUNG DER HEIZUNGSVORRICHTUNG**
HEATING DEVICE AND METHOD FOR MANUFACTURING THE HEATING DEVICE
DISPOSITIF DE CHAUFFAGE ET PROCÉDÉ DE PRODUCTION ASSOCIÉ

(30) Priorität: 07.08.2008 DE 102008036835
(43) Veröffentlichungstag der Anmeldung: 18.05.2011
(73) Patentinhaber: Epcos AG, 81669 München (DE)
(72) Erfinder: IHLE, Jan, Grambach 8071 Austria (AT); KAHR, Werner, A-8530 Deutschlandsberg (AT)
(74) Vertreter: Epping - Hermann - Fischer
(86) Internationale Anmeldenummer: PCT/EP2009/059519
(87) Internationale Veröffentlichungsnummer: WO 2010/015525

(56) Entgegenhaltungen:
- EP-A- 0 635 993
- DE-A1- 2 753 766
- DE-A1- 19 818 375
- US-A1- 2006 182 908
- US-B1- 6 396 028

## Beschreibung

Die Erfindung betrifft eine Heizungsvorrichtung und ein Verfahren zur Herstellung einer Heizungsvorrichtung.

Medien, beispielsweise Fluide, können mittels eines thermischen Kontakts mit Materialien, die einen positiven Temperaturkoeffizienten des elektrischen Widerstands haben (PTC-Materialien), erhitzt werden. Solche PTC-Materialien können bisher als Scheiben oder Rechteckelemente ausgeformt werden, die aus einem einzigen PTC-Material bestehen. Solche Scheiben oder Recheckelemente können an konstruktiv schwer zugänglichen Bereichen nicht integriert werden. Dadurch können keine kurzen Aufheizzeiten und geringe Heizleistungen realisiert werden, da die Scheiben oder Rechteckelemente nicht dort angebracht werden können, wo die Wärme benötigt wird.

EP 0635993 offenbart eine Heizungsvorrichtung, die Stand der Technik ist.

Eine zu lösende Aufgabe besteht darin, eine Heizungsvorrichtung mit hohem Wirkungsgrad bereitzustellen. Diese Aufgabe wird durch eine Heizungsvorrichtung gemäß dem Patentanspruch 1 gelöst. Weitere Ausführungsformen der Vorrichtung und ein Verfahren zur Herstellung einer Heizungsvorrichtung sind Gegenstand weiterer Patentansprüche.

Gemäß einer Ausführungsform wird eine Heizungsvorrichtung bereitgestellt, die einen Formkörper umfasst, der ein keramisches Material mit positivem Temperaturkoeffizienten des elektrischen Widerstands enthält. Der Formkörper umfasst dabei zumindest einen ersten Bereich und einen zweiten Bereich, wobei der erste Bereich ein keramisches Material einer ersten Zusammensetzung und der zweite Bereich ein keramisches Material einer von der ersten unterschiedlichen zweiten Zusammensetzung aufweist.

Damit wird eine Heizungsvorrichtung bereitgestellt, die einen Formkörper enthält, der mindestens zwei unterschiedlich zusammengesetzte keramische Materialien aufweist. Durch die Verwendung von keramischen Materialien mit positivem Temperaturkoeffizienten des elektrischen Widerstands wird ein Formkörper bereitgestellt, der sich durch Anlegen einer Spannung erwärmt und diese Wärme an die Umgebung abgeben kann. Dabei weist der Formkörper ein selbstregulierendes Verhalten auf. Erreicht die Temperatur in dem Formkörper einen kritischen Wert, steigt auch der Widerstand in dem Formkörper, sodass weniger Strom durch den Formkörper fließt. Damit wird ein weiteres Aufheizen des Formkörpers verhindert, so dass keine zusätzliche elektronische Regelung der Heizleistung bereitgestellt werden muss.

Durch die Verwendung von zumindest zwei verschiedenen keramischen Materialien in einem Formkörper ist es möglich, verschiedene Heizungseigenschaften in dem einen Formkörper zu erzielen. Beispielsweise kann der erste Bereich ein langsames Aufheizverhalten aufweisen, während der zweite Bereich ein schnelles Aufheizverhalten zeigt. Auch die maximale Heiztemperatur kann in den beiden Bereichen unterschiedlich sein.

Weiterhin kann der Formkörper mittels Spritzguss hergestellt, und damit in jeder geometrischen Form, die für die jeweilige konstruktive Umgebung nötig ist, ausgeformt sein. Eine solche Heizvorrichtung kann somit auch an konstruktiv schwer zugänglichen Bereichen angeordnet werden. Somit kann ein Medium effizient mit sehr kurzen Aufheizzeiten und niedrigen Heizleistungen beheizt werden.

Durch die Verwendung eines einzigen Formkörpers, der zumindest zwei Bereiche mit verschiedenen Heizungseigenschaften aufweist, kann vermieden werden, dass mehrere Bauteile zusammengefügt und aneinander befestigt werden müssen. Es sind in dem Formkörper bereits verschiedene Funktionen durch die verschiedenen Bereiche vorgegeben, die ohne Unterbrechung ineinander übergehen.

Das zu beheizende Medium wird, je nachdem, von welchem Bereich es beheizt wird, unterschiedlich stark oder unterschiedlich schnell beheizt. Somit kann beispielsweise eine stufenweise Beheizung realisiert werden, wenn ein Medium entlang der verschiedenen Bereiche des Formkörpers vorbeigeleitet wird.

Die erste und zweite Zusammensetzung des keramischen Materials kann eine stoffliche und/oder eine stöchiometrische Zusammensetzung umfassen. Die Zusammensetzungen können also nur in ihrer stofflichen oder nur in ihrer stöchiometrischen Zusammensetzung oder in ihrer stofflichen und in ihrer stöchiometrischen Zusammensetzung variieren. In jedem Fall sind die Zusammensetzungen der Materialien voneinander unterschiedlich und können unterschiedliche Eigenschaften aufweisen.

Der erste Bereich und der zweite Bereich des Formkörpers können voneinander unterschiedliche thermische und/oder elektrische Eigenschaften aufweisen. Beispielsweise können die Bereiche bei gleichen elektrischen Eigenschaften unterschiedliche Aufheizraten und unterschiedliche zu erreichende maximale Temperaturen aufweisen. Andererseits können die Bereiche beispielsweise unterschiedliche Widerstände bei einer gegebenen Temperatur aufweisen. Auch alle diese genannten Eigenschaften können in den beiden Bereichen voneinander unterschiedlich sein. In einer Widerstands-Temperatur-Kennlinie eines keramischen Materials, deren Verlauf die thermischen Eigenschaften in Abhängigkeit des spezifischen elektrischen Widerstandes wiedergibt, wird die Verknüpfung der thermischen und elektrischen Eigenschaften des Materials verdeutlicht.

Somit wird ein Formkörper bereitgestellt, der lokal unterschiedliche Funktionen in zumindest zwei Bereichen aufgrund der elektrischen und thermischen Eigenschaften der dort vorhandenen keramischen Materialien aufweist. Beispielsweise können so variierende Temperaturverteilungen in dem Formkörper erzielt werden.

Das keramische Material kann eine Struktur aufweisen, die die Formel Ba_{1-x-y}MₓD_{y}Ti_{1-a-b}NₐMn_{b}O₃ aufweist. Dabei umfasst x den Bereich 0 bis 0,5, y den Bereich 0 bis 0,01, a den Bereich 0 bis 0,01, b den Bereich 0 bis 0,01, M ein zweiwertiges Kation, D einen drei- oder vierwertigen Donor und N ein fünf- oder sechswertiges Kation. Diese Struktur weist eine Perowskitstruktur auf. M kann beispielsweise Calcium, Strontium oder Blei sein, D kann beispielsweise Yttrium oder Lanthan sein, Beispiele für N sind Niob oder Antimon. Der Formkörper kann metallische Verunreinigungen umfassen, die mit einem Gehalt von weniger als 10 ppm vorhanden sind. Der Gehalt an metallischen Verunreinigungen ist so gering, dass die PTC-Eigenschaften des Formkörpers nicht beeinflusst werden.

Der erste Bereich und zweite Bereich des Formkörpers kann eine Curie-Temperatur aufweisen, die einen Bereich von -30° C bis 340° C umfasst. Weiterhin kann der erste Bereich und zweite Bereich des Formkörpers einen spezifischen Widerstand bei 25° aufweisen, der in einem Bereich von 3 Ωcm bis 100000 Qcm liegt.

Der erste Bereich und der zweite Bereich des Formkörpers können gleiche Curie-Temperaturen und voneinander unterschiedliche spezifische Widerstände bei 25° C oder gleiche spezifische Widerstände bei 25° C und voneinander unterschiedliche Curie-Temperaturen oder voneinander unterschiedliche Curie-Temperaturen und voneinander unterschiedliche spezifische Widerstände bei 25° C aufweisen. Somit weisen die beiden Bereiche des Formkörpers unterschiedliche Heizeigenschaften auf, entweder aufgrund von unterschiedlichen elektrischen Eigenschaften oder aufgrund von unterschiedlichen thermischen Eigenschaften oder aufgrund von unterschiedlichen elektrischen und thermischen Eigenschaften. Durch die möglichen lokal unterschiedlichen Heizeigenschaften des Formkörpers kann eine Anpassung der Heizleistung für einen stufenweisen optimalen Wärmeübergang zu dem zu beheizenden Medium realisiert werden.

Zwischen dem ersten Bereich und dem zweiten Bereich kann ein Grenzflächenbereich vorhanden sein, in dem das keramische Material des ersten Bereichs und das keramische Material des zweiten Bereichs miteinander versintert sind.

Die Heizungsvorrichtung kann weiterhin elektrische Kontaktierungen zur Erzeugung eines Stromflusses durch den Formkörper aufweisen. Diese Kontaktierungen können auf dem Formkörper angeordnet sein und umfassen an dem Formkörper angebrachte Elektroden, die elektrisch leitend mit externen elektrischen Kontakten verbunden sind.

Die Kontaktierungen können so an dem Formkörper angeordnet sein, dass jeder Bereich des Formkörpers von Strom durchflossen ist. Damit wird in jedem Bereich des Formkörpers durch die PTC-Eigenschaften der keramischen Materialien Wärme erzeugt.

Es kann jede Kontaktierung jeden der zumindest zwei Bereiche des Formkörpers kontaktieren. Beispielsweise können zwei nebeneinander angeordnete Bereiche des Formkörpers auf zwei sich gegenüberliegenden Seiten elektrische Kontaktierungen aufweisen, die jeweils beide Bereiche kontaktieren. Damit wird ein Gradient der thermischen und elektrischen Eigenschaften in den Bereichen des Formkörpers erzeugt, der parallel zu der Ebene der elektrischen Kontaktierungen verläuft.

Weiterhin können die Bereiche nebeneinander angeordnet sein und jeder Bereich von je zwei Kontaktierungen auf gegenüberliegenden Seiten kontaktiert werden. Damit kann eine Parallelschaltung der Bereiche realisiert werden.

Weiterhin können die Bereiche des Formkörpers so zwischen den Kontaktierungen angeordnet sein, dass jede Kontaktierung einen unterschiedlichen Bereich kontaktiert. Beispielsweise können zwei übereinander angeordnete Bereiche von einer ersten und zweiten elektrischen Kontaktierung kontaktiert werden, wobei die erste Kontaktierung den ersten Bereich und die zweite Kontaktierung den zweiten Bereich kontaktiert. Gleichzeitig können sich die beiden Kontaktierungen gegenüber liegen. Somit wird eine Serienschaltung der Bereiche realisiert und ein Gradient der thermischen und elektrischen Eigenschaften in dem Formkörper erzeugt, der senkrecht zu der Ebene der elektrischen Kontaktierungen verläuft. Es ist auch möglich, dass drei oder auch mehr Bereiche des Formkörpers mit unterschiedlichen elektrischen und thermischen Eigenschaften übereinander angeordnet sind, wobei nur die beiden äußeren Bereiche von elektrischen Kontaktierungen kontaktiert werden, sodass ein Stromfluss durch alle Bereiche erzeugt wird.

Der Formkörper kann so ausgeformt sein, dass er von einem Medium, beispielsweise einem Fluid, durchströmt wird. Dann kann der Formkörper beispielsweise in Form eines Rohres oder einer Düse ausgeformt sein. Weiterhin kann der Formkörper auch von einem Medium umspült werden und in beliebigen weiteren geometrischen Formen ausgeformt sein.

Wenn der Formkörper als Düse, also als Rohr mit einer Verjüngung an einem Ende, ausgeformt ist, kann die Düse verschiedene Bereiche aufweisen, die unterschiedliche elektrische und/oder thermische Eigenschaften haben, sodass ein Medium, das durch die Düse durchgeleitet wird, diese Bereiche nacheinander durchströmt und somit stufenweise erwärmt werden kann. Diese Bereiche können entlang der Längsachse des Rohres hintereinander oder senkrecht zu der Längsachse übereinander angeordnet sein.

Der Formkörper kann groß- oder ganzflächig von einer Passivierungsschicht umgeben sein. Die Passivierungsschicht kann ein Material aufweisen, das ausgewählt ist aus Glas, Kunststoff, Silikon oder einem keramischen Material, das von dem keramischen Material des Formkörpers unterschiedlich ist. Somit wird ein direkter Kontakt zwischen dem Formkörper und dem zu beheizenden Medium verhindert. Damit kann vermieden werden, dass der Formkörper durch das zu beheizende Medium korrosiv angegriffen oder durch das Medium gelöst wird. Weiterhin wird vermieden, dass das zu beheizende Medium durch das Material des Formkörpers kontaminiert wird.

Es wird weiterhin ein Verfahren zur Herstellung einer Heizungsvorrichtung bereitgestellt mit den Verfahrensschritten
A) Spritzgießen eines Grünkörpers,
B) Sintern des Grünkörpers zur Herstellung eines Formkörpers,
C) Anordnen von elektrischen Kontaktierungen auf dem Formkörper.
In dem Verfahrensschritt A) werden dabei nacheinander zumindest zwei voneinander unterschiedliche keramische Materialien, die einen positiven Temperaturkoeffizienten des elektrischen Widerstands aufweisen, spritzgegossen. Somit wird in einem einzigen Verfahrensschritt ein Grünkörper erzeugt, der zumindest zwei Bereiche mit keramischen Materialien aufweist. Dieser Grünkörper wird dann in dem weiteren Verfahrensschritt B) zu einem Formkörper gesintert, der zwei Bereiche mit verschiedenen Heizeigenschaften aufweist.

Weiterhin wird im Verfahrensschritt A) für die Herstellung des Grünkörpers ein keramisches Ausgangsmaterial bereitgestellt, das ein keramisches Füllmaterial der Struktur Ba_{1-x-y}MₓD_{y}Ti_{1-a-b}NₐMn_{b}O₃ und eine Matrix aufweist.

Um das keramische Ausgangsmaterial, mit weniger als 10 ppm metallischen Verunreinigungen herzustellen, kann es mit Werkzeugen hergestellt werden, die eine harte Beschichtung aufweisen, um einen Abrieb zu vermeiden. Eine harte Beschichtung kann beispielsweise aus Wolframcarbid bestehen. Alle Oberflächen der Werkzeuge, die mit dem keramischen Material in Berührung kommen, können mit der harten Beschichtung beschichtet sein.

Auf diese Weise kann ein keramisches Füllmaterial, das durch Sintern in ein keramisches PTC-Material überführt werden kann, mit einer Matrix vermischt und zu einem Granulat verarbeitet werden. Dieses Granulat kann zur Weiterverarbeitung spritzgegossen werden.

Die Matrix, in die das keramische Füllmaterial eingelagert ist und die einen geringeren Schmelzpunkt aufweist, als das keramische Material, kann dabei einen Anteil von weniger als 20 Massen% gegenüber dem keramischen Material aufweisen. Die Matrix kann ein Material umfassen, das aus einer Gruppe ausgewählt ist, die Wachs, Harze, Thermoplaste und wasserlösliche Polymere umfasst. Weitere Zusätze, wie Antioxidantien oder Weichmacher können ebenfalls vorhanden sein.

Der Verfahrensschritt A) kann die Schritte
A1) Bereitstellen des keramischen Ausgangsmaterials,
A2) Spritzgiessen des Ausgangsmaterials in eine Form, und
A3) Entfernen der Matrix
aufweisen.

Während des Sinterns im Verfahrensschritt B) wird das keramische Ausgangsmaterial in das Material des Formkörpers, das einen positiven Temperaturkoeffizienten des elektrischen Widerstands aufweist, überführt.

In dem Verfahrensschritt B) wird zwischen den zumindest zwei unterschiedlichen Materialien ein Grenzflächenbereich gebildet, in dem die unterschiedlichen keramischen Materialien miteinander versintert sind und somit Mischkristalle bilden. Der Grenzflächenbereich kann eine Dicke von 1 Mikrometer bis 200 Mikrometer aufweisen, wobei die Dicke von der Auswahl der Materialien abhängt. Eine völlige Vermischung der beiden Materialien wird vermieden. Weiterhin dient der Grenzflächenbereich, in dem die keramischen Materialien miteinander versintert sind, dazu, die Bereiche des Formkörpers miteinander zu verbinden, sodass ein lückenloser Übergang zwischen den Bereichen und damit ein monolithischer Formkörper realisiert wird. Zusätzliche Befestigungen zwischen den Bereichen sind somit nicht nötig.

Anhand der Figuren und Ausführungsbeispiele soll die Erfindung noch näher erläutert werden.
- Figur 1: zeigt die schematische Seitenansicht einer ersten Ausführungsform der Heizungsvorrichtung,
- Figur 2: zeigt die schematische Seitenansicht einer zweiten Ausführungsform der Heizungsvorrichtung,
- Figur 3: zeigt die schematische perspektivische Ansicht einer Ausführungsform der Heizungsvorrichtung,
- Figur 4: zeigt die schematische perspektivische Ansicht einer weiteren Ausführungsform der Heizungsvorrichtung.
- Figur 5: zeigt Widerstands-Temperatur-Kennlinien keramischer Materialien.

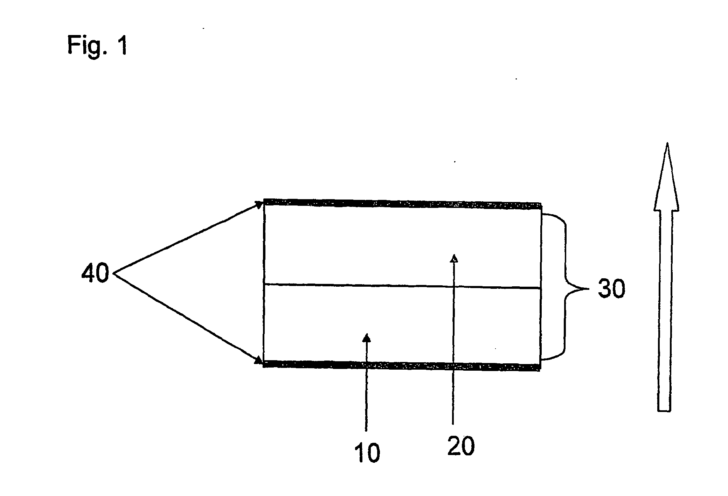

Figur 1 zeigt die schematische Seitenansicht einer ersten Ausführungsform der Heizungsvorrichtung. Dabei ist ein erster Bereich 10 und ein zweiter Bereich 20 eines Formkörpers 30 übereinander angeordnet. Beide Bereiche umfassen keramische Materialien mit positivem Temperaturkoeffizienten des elektrischen Widerstands der Struktur Ba_{1-x-y}MₓD_{y}Ti₁₋ₐ-_{b}NₐMn_{b}O₃, wobei die Zusammensetzungen der keramischen Materialien in den Bereichen unterschiedlich sind.

Auf dem Bereich 10 ist eine elektrische Kontaktierung 40 angeordnet und auf dem Bereich 20 ist eine weitere elektrische Kontaktierung 40 angeordnet. Somit wird jeder Bereich von einer anderen elektrischen Kontaktierung kontaktiert. Durch diese Anordnung der Bereiche in dem Formkörper 30 entsteht in dem Formkörper ein Gradient der elektrischen und/oder thermischen Eigenschaften, der senkrecht zu der Ebene der Kontaktierungen verläuft. Dies ist schematisch durch einen Pfeil angedeutet. Die unterschiedlichen elektrischen und/oder thermischen Eigenschaften, wie beispielsweise die Curie-Temperatur oder der spezifische Widerstand bei 25°C der Bereiche 10 und 20 werden durch unterschiedliche Zusammensetzungen der keramischen Materialien in den beiden Bereichen erzeugt. Es ist denkbar, dass zwischen oder über bzw. unter den Bereichen 10 und 20 noch weitere Bereiche mit weiteren davon unterschiedlichen Zusammensetzungen vorhanden sind (hier nicht gezeigt).

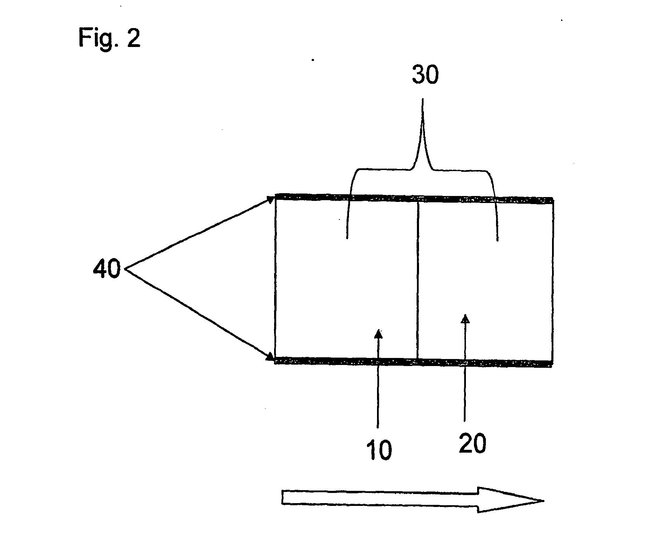

Figur 2 zeigt die schematische Seitenansicht einer weiteren Ausführungsform der Heizungsvorrichtung. Dabei ist ein Bereich 10 neben einem Bereich 20 angeordnet, und die elektrischen Kontaktierungen kontaktieren jeweils beide Bereiche und sind auf gegenüber liegenden Seiten des Formkörpers angeordnet. In dem Formkörper 30 wird somit ein Gradient der thermischen und/oder elektrischen Eigenschaften erzeugt, der parallel zu der Ebene der elektrischen Kontaktierungen 40 verläuft. Dies ist durch einen Pfeil angedeutet. Es können neben den Bereichen 10 und 20 weitere Bereiche des Formkörpers vorhanden sein, die neben den Bereichen 10 und 20 angeordnet sind und von den elektrischen Kontaktierungen 40 kontaktiert werden (hier nicht gezeigt).

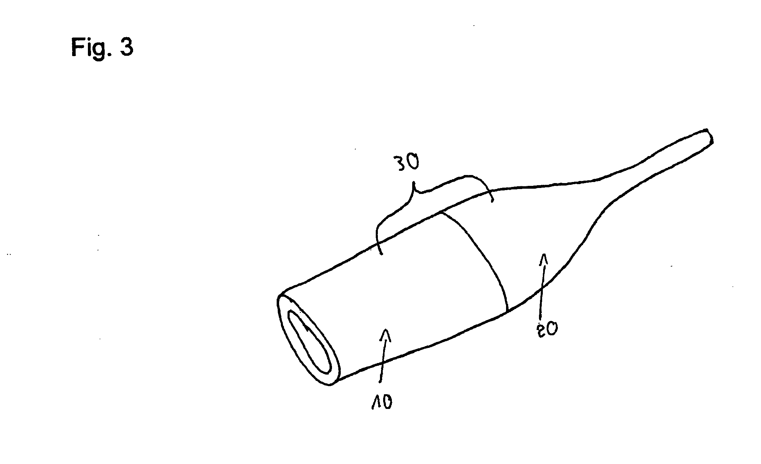

Figur 3 zeigt die perspektivische, schematische Seitenansicht eines Ausführungsbeispiels für eine Heizungsvorrichtung. Hier ist der Formkörper als Düse ausgeformt, der die Bereiche 10 und 20 aufweist, die hintereinander in der Längsrichtung der Düse angeordnet sind. Der Übersicht halber sind die elektrischen Kontaktierungen 40 hier nicht gezeigt. Sie können beispielsweise auf der Oberfläche des Formkörpers, an der Außen- und Innenseite der Düse, oder an dessen Stirnseiten angebracht sein. Wird nun ein zu beheizendes Medium durch die Düse hindurch geleitet, könnte beispielsweise der Bereich 10 zu einer Vorwärmung des Mediums führen und der Bereich 20 das Medium auf die gewünschte Endtemperatur erwärmen. Somit ist ein stufenweises Erwärmen eines Mediums durch einen Formkörper mit verschiedenen Bereichen denkbar. Auch hier können neben den beiden Bereichen 10 und 20 weitere Bereiche vorhanden sein, um eine feinere Abstimmung der Heiztemperaturen zu erzeugen.

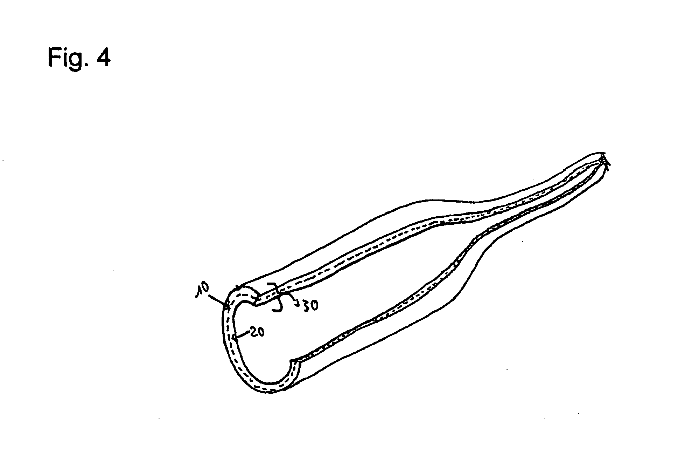

Figur 4 zeigt eine weitere perspektivische schematische Seitenansicht einer Ausführungsform der Heizungsvorrichtung. Auch hier ist der Formkörper als Düse ausgeformt. Zur Veranschaulichung wird ein Teil der Düse im vorderen Bereich ausgespart. Die Bereiche 10 und 20 sind hier so angeordnet, dass ein zu beheizendes Medium, das durch die Düse hindurchgeleitet wird, nur mit einem der Bereiche in Berührung kommt, während der andere Bereich auf der Außenseite der Düse angeordnet ist. Hier könnte es beispielsweise sinnvoll sein, das Material für den Bereich 10 so zu wählen, dass nur eine geringe Erwärmung durch Anlegen der Spannung erzeugt wird, während in dem Bereich 20 eine starke Erwärmung erzeugt wird. Somit wird nur in dem Bereich, der dem zu beheizenden Medium näher ist, eine starke Erhitzung des Formkörpers bewirkt. In diesem Ausführungsbeispiel können die Elektroden 40 (hier nicht gezeigt) beispielsweise auf der Innen- und auf der Außenfläche der Düse angeordnet werden.

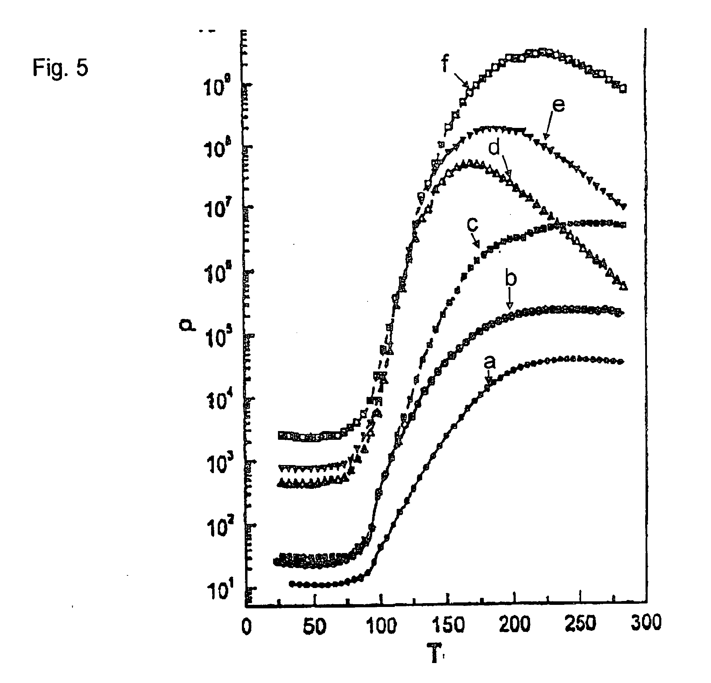

Zur Veranschaulichung der elektrischen und thermischen Eigenschaften und deren Abhängigkeit voneinander zeigt die Figur 5 die Widerstands-Temperatur-Kennlinien (RT-Kennlinie) eines keramischen Materials mit verschieden hohen Dotierungen. Aufgetragen ist die Temperatur T in °C gegen den spezifischen Widerstand p in Ωcm. Bei dem keramischen Material handelt es sich um Ba_{0,9}Sr_{0,1}TiO₃, das nicht dotiert ist (Kurve a) und mit 0,02% (Kurve b), 0,04% (Kurve c), 0,06% (Kurve d), 0,08% (Kurve e) und 0,1% (Kurve f) Mn dotiert ist. Je höher die Dotierung in dem keramischen Material ist, desto höher ist der spezifische Widerstand ρ bei Temperaturen unterhalb des Temperaturbereichs, bei dem der Widerstand temperaturabhängig ansteigt, und bei Temperaturen oberhalb des Temperaturbereichs, bei dem der Widerstand temperaturabhängig ansteigt.

Die in den Figuren gezeigten Ausführungsformen können beliebig variiert werden. Es ist weiterhin zu berücksichtigen, dass sich die Erfindung nicht auf die Beispiele beschränkt, sondern weitere hier nicht aufgeführte Ausgestaltungen zulässt.

### Bezugszeichenliste

- 10: erster Bereich
- 20: zweiter Bereich
- 30: Formkörper
- 40: elektrische Kontaktierung
- T: Temperatur
- p: spezifischer Widerstand
- a: RT-Kennlinie von undotiertem Ba_{o,9}Sr_{0,1}TiO₃
- b: RT-Kennlinie von Ba_{0,9}Sr_{0,1}TiO₃ dotiert mit 0,02% Mn
- c: RT-Kennlinie von Ba_{0,9}Sr_{0,1}TiO₃ dotiert mit 0,04% Mn
- d: RT-Kennlinie von Ba_{0,9}Sr_{0,1}TiO₃ dotiert mit 0,06% Mn
- e: RT-Kennlinie von Ba_{0,9}Sr_{0,1}TiO₃ dotiert mit 0,08% Mn
- f: RT-Kennlinie von Ba_{0,9}Sr_{0,1}TiO₃ dotiert mit 0,1% Mn

## Patentansprüche

1. Heizungsvorrichtung, umfassend einen Formkörper (30), der ein keramisches Material mit positivem Temperaturkoeffizienten des elektrischen Widerstands enthält und zumindest einen ersten Bereich (10) und einen zweiten Bereich (20) umfasst, wobei der erste Bereich (10) ein keramisches Material einer ersten Zusammensetzung und der zweite Bereich ein keramisches Material einer von der ersten unterschiedlichen zweiten Zusammensetzung aufweist und wobei der erste Bereich (10) und zweite Bereich (20) des Formkörpers (30) eine Curie-Temperatur aufweisen, die in einen Bereich von -30°C bis 340°C fällt.

2. Heizungsvorrichtung nach dem vorhergehenden Anspruch, wobei die erste und zweite Zusammensetzung des keramischen Materials stoffliche und/oder stöchiometrische Zusammensetzungen umfassen.

3. Heizungsvorrichtung nach einem der vorhergehenden Ansprüche, wobei der erste Bereich (10) und zweite Bereich (20) des Formkörpers (30) voneinander unterschiedliche thermische und/oder elektrische Eigenschaften aufweisen.

4. Heizungsvorrichtung nach einem der vorhergehenden Ansprüche, wobei das keramische Material die Struktur Ba_{1-x-y}MₓDyTi_{1-a-b}NₐMn_{b}O₃ aufweist, wobei x = 0 bis 0,5, y = 0 bis 0,01, a = 0 bis 0,01, b = 0 bis 0,01, M ein zweiwertiges Kation umfasst, D einen drei- oder vierwertigen Donor umfasst und N ein fünf- oder sechswertiges Kation umfasst.

5. Heizungsvorrichtung nach einem der vorhergehenden Ansprüche, wobei der erste Bereich (10) und zweite Bereich (20) des Formkörpers (30) einen spezifischen Widerstand bei 25°C aufweisen, der in einem Bereich von 3 Ωcm bis 100000 Ωcm liegt.

6. Heizungsvorrichtung nach einem der vorhergehenden Ansprüche, wobei der erste Bereich (10) und zweite Bereich (20) des Formkörpers (30) gleiche Curie-Temperaturen und voneinander unterschiedliche spezifische Widerstände bei 25°C, oder gleiche spezifische Widerstände bei 25°C und voneinander unterschiedliche Curie-Temperaturen, oder voneinander unterschiedliche Curie-Temperaturen und voneinander unterschiedliche spezifische Widerstände bei 25°C aufweisen.

7. Heizungsvorrichtung nach einem der vorhergehenden Ansprüche, wobei der Formkörper (30) elektrische Kontaktierungen (40) zur Erzeugung eines Stromflusses durch den Formkörper aufweist.

8. Heizungsvorrichtung nach dem vorhergehenden Anspruch, wobei die Kontaktierungen (40) so an dem Formkörper (30) angeordnet sind, dass jeder Bereich des Formkörpers (30) von Strom durchflossen ist.

9. Heizungsvorrichtung nach einem der Ansprüche 7 oder 8, wobei jede Kontaktierung (40) jeden der zumindest zwei Bereiche (10, 20) des Formkörpers (30) kontaktiert.

10. Heizungsvorrichtung nach einem der Ansprüche 7 oder 8, wobei die Bereiche des Formkörpers (30) so zwischen den Kontaktierungen (40) angeordnet sind, dass jede Kontaktierung (40) einen unterschiedlichen Bereich kontaktiert.

11. Heizungsvorrichtung nach einem der vorhergehenden Ansprüche, wobei der Formkörper (30) als Düse ausgeformt ist.

12. Heizungsvorrichtung nach einem der vorhergehenden Ansprüche, wobei auf dem Formkörper (30) eine Passivierungsschicht angeordnet ist.

13. Verfahren zur Herstellung einer Heizungsvorrichtung nach einem der Ansprüche 1 bis 12 mit den Verfahrensschritten
A) Spritzgiessen eines Grünkörpers (30),
B) Sintern des Grünkörpers zur Herstellung eines Formkörpers (30),
C) Anordnen von elektrischen Kontaktierungen (40) auf dem Formkörper,
wobei im Verfahrensschritt A) nacheinander zumindest zwei voneinander unterschiedliche keramische Materialien, die einen positiven Temperaturkoeffizienten des elektrischen Widerstands aufweisen, spritzgegossen werden.

14. Verfahren nach dem vorhergehenden Anspruch, wobei im Verfahrensschritt B) zwischen den zumindest zwei unterschiedlichen Materialien ein Grenzflächenbereich gebildet wird, in dem die keramischen Materialien miteinander versintert sind.

## Claims

1. Heating device, comprising a shaped body (30), which contains a ceramic material with a positive temperature coefficient of electrical resistance and comprises at least one first region (10) and one second region (20), wherein the first region (10) comprises a ceramic material of a first composition and the second region comprises a ceramic material of a second composition, which is different from the first composition, and wherein the first region (10) and the second region (20) of the shaped body (30) have a Curie temperature which falls in a range of -30°C to 340°C.

2. Heating device according to the preceding claim, wherein the first and second compositions of the ceramic material comprise material and/or stoichiometric compositions.

3. Heating device according to either of the preceding claims, wherein the first region (10) and the second region (20) of the shaped body (30) have mutually different thermal and/or electrical properties.

4. Heating device according to any of the preceding claims, wherein the ceramic material comprises the structure Ba_{1-x-y}MₓD_{y}Ti_{1-a-b}NₐMn_{b}O₃, where x = 0 to 0.5, y = 0 to 0.01, a = 0 to 0.01, b = 0 to 0.01, M comprises a divalent cation, D comprises a trivalent or tetravalent donor, and N comprises a pentavalent or hexavalent cation.

5. Heating device according to any of the preceding claims, wherein the first region (10) and the second region (20) of the shaped body (30) have a resistivity at 25°C which lies in a range of 3 Ωcm to 100 000 Ωcm.

6. Heating device according to any of the preceding claims, wherein the first region (10) and the second region (20) of the shaped body (30) have identical Curie temperatures and mutually different resistivities at 25°C, or identical resistivities at 25°C and mutually different Curie temperatures, or mutually different Curie temperatures and mutually different resistivities at 25°C.

7. Heating device according to any of the preceding claims, wherein the shaped body (30) has electrical contact-connections (40) for generating a current flow through the shaped body.

8. Heating device according to the preceding claim, wherein the contact-connections (40) are arranged at the shaped body (30) in such a way that current flows through each region of the shaped body (30).

9. Heating device according to either of Claims 7 and 8, wherein each contact-connection (40) makes contact with each of the at least two regions (10, 20) of the shaped body (30).

10. Heating device according to either of Claims 7 and 8, wherein the regions of the shaped body (30) are arranged between the contact-connections (40) in such a way that each contact-connection (40) makes contact with a different region.

11. Heating device according to any of the preceding claims, wherein the shaped body (30) is shaped as a nozzle.

12. Heating device according to any of the preceding claims, wherein a passivation layer is arranged on the shaped body (30).

13. Method for manufacturing a heating device according to any of Claims 1 to 12, comprising the following method steps:
A) injection-molding a green body (30),
B) sintering the green body in order to produce a shaped body (30),
C) arranging electrical contact-connections (40) on the shaped body,
wherein at least two mutually different ceramic materials having a positive temperature coefficient of electrical resistance are injection-molded successively in method step A).

14. Method according to the preceding claim, wherein, in method step B), an interface region is formed between the at least two different materials, in which interface region the ceramic materials are sintered together.

## Revendications

1. Dispositif de chauffage comprenant un corps moulé (30) qui contient un matériau céramique avec un coefficient de température positif de la résistance électrique et comprend au moins une première zone (10) et une deuxième zone (20), pour lequel la première zone (10) comporte un matériau céramique d'une première composition et la deuxième zone comporte un matériau céramique d'une deuxième composition différente de la première et pour lequel la première zone (10) et la deuxième zone (20) du corps moulé (30) comportent un point de Curie qui tombe dans une gamme allant de -30°C à 340°C.

2. Dispositif de chauffage selon la revendication précédente, pour lequel les première et deuxième compositions du matériau céramique comprennent des compositions matérielles et/ou stoechiométriques.

3. Dispositif de chauffage selon l'une quelconque des revendications précédentes, pour lequel la première zone (10) et la deuxième zone (20) du corps moulé (30) présentent des propriétés thermiques et/ou électriques différentes les unes des autres.

4. Dispositif de chauffage selon l'une quelconque des revendications précédentes, pour lequel le matériau céramique présente la structure Ba_{1-x-y}MₓD_{y}Ti_{1-a-b}NₐMn_{b}O₃, où x = 0 à 0,5, y = 0 à 0, 01, a = 0 à 0, 01, b = 0 à 0, 01, M comprend un cation bivalent, D comprend un donneur tri- ou quadrivalent et N comprend un cation penta- ou hexavalent.

5. Dispositif de chauffage selon l'une quelconque des revendications précédentes, pour lequel la première zone (10) et la deuxième zone (20) du corps moulé (30) présentent une résistance spécifique à 25°C, qui se situe dans une gamme de 3 Ωcm à 100000 Ωcm.

6. Dispositif de chauffage selon l'une quelconque des revendications précédentes, pour lequel la première zone (10) et la deuxième zone (20) du corps moulé (30) présentent des points de Curie analogues et des résistances spécifiques différentes l'une de l'autre à 25°C ou des résistances spécifiques analogues à 25°C et des points de Curie différents l'un de l'autre ou des points de Curie différents l'un de l'autre et des résistances spécifiques différentes l'une de l'autre à 25°C.

7. Dispositif de chauffage selon l'une quelconque des revendications précédentes, pour lequel le corps moulé (30) comporte des contacts électriques (40) pour produire un flux de courant à travers le corps moulé.

8. Dispositif de chauffage selon la revendication précédente, pour lequel les contacts (40) sont disposés sur le corps moulé (30) de telle manière que chaque zone du corps moulé (30) est traversée par du courant.

9. Dispositif de chauffage selon l'une quelconque des revendications 7 ou 8, pour lequel chaque contact (40) est en contact avec chacune des au moins deux zones (10, 20) du corps moulé (30).

10. Dispositif de chauffage selon l'une quelconque des revendications 7 ou 8, pour lequel les zones du corps moulé (30) sont disposées entre les contacts (40) de telle manière que chaque contact (40) est en contact avec une zone différente.

11. Dispositif de chauffage selon l'une quelconque des revendications précédentes, pour lequel le corps moulé (30) est formé comme une buse.

12. Dispositif de chauffage selon l'une quelconque des revendications précédentes, pour lequel une couche de passivation est disposée sur le corps moulé (30).

13. Procédé de production d'un dispositif de chauffage selon l'une quelconque des revendications 1 à 12 avec les étapes de procédé suivantes.
A) moulage par injection d'un corps de base (30),
B) frittage du corps de base pour la production d'un corps moulé (30),
C) mise en place de contacts électriques (40) sur le corps moulé,
pour lequel dans l'étape de procédé A) au moins deux matériaux céramiques différents l'un de l'autre, présentant un coefficient de température positif de la résistance électrique, sont moulés l'un après l'autre par injection.

14. Procédé selon la revendication précédente, pour lequel dans l'étape de procédé B) une zone de surface limite est formée entre les au moins deux matériaux différents dans laquelle les matériaux céramiques sont frittés entre eux.
